# EUROPEAN PATENT APPLICATION

(11) **EP 4 509 565 A1**
(43) Date of publication of application: **19.02.2025**
(21) Application number: 23788398.8
(22) Date of filing: 13.04.2023
(51) Int. Cl.: C08L 101/00, C08K 3/22, C08K 5/3432

(54) **RESIN COMPOSITION, RESIN ADDITIVE COMPOSITION, RESIN STRUCTURE, METHOD FOR IMPROVING WEATHER RESISTANCE, METHOD FOR PRODUCING RESIN COMPOSITION, AND HINDERED AMINE PHOTOSTABILIZER**

(30) Priority: 13.04.2022 JP 2022066464
(71) Applicant: ADEKA CORPORATION, Arakawa-ku Tokyo 116-8554 (JP)
(72) Inventor: UEDA Marina, Saitama-shi, Saitama 336-0022 (JP); HIDANO Tomohiro, Saitama-shi, Saitama 336-0022 (JP); UEDA Naoto, Saitama-shi, Saitama 336-0022 (JP)
(74) Representative: Müller-Boré & Partner Patentanwälte PartG mbB
(86) International application number: PCT/JP2023/015036
(87) International publication number: WO 2023/199980

(57) **Abstract**

A resin composition according to the present invention includes a synthetic resin, a hindered amine light stabilizer, and a photocatalyst, in which the photocatalyst content is equal to or more than 0.001 parts by mass and less than 0.5 parts by mass with respect to 100 parts by mass of the synthetic resin.

## Description

### TECHNICAL FIELD

The present invention relates to a resin composition, a resin additive composition, a resin structure, a method for improving weather resistance, a method for producing a resin composition, and a hindered amine light stabilizer.

### BACKGROUND ART

Various developments have been made so far regarding techniques for modifying resin compositions. As this type of technique, for example, the technique disclosed in Patent Document 1 is known. Patent Document 1 proposes a polyolefin-based resin composition including a polyolefin-based resin having a melt index of 6 to 60 g/10 min, titanium oxide, and a specific hindered amine stabilizer and indicates that this polyolefin-based resin composition has extremely excellent weather resistance and light resistance and is unlikely to discolor over time, despite having the polyolefin-based resin having a high melt index as the resin component. (Claim 1, etc., of Patent Document 1)

### RELATED DOCUMENT

### PATENT DOCUMENT

[Patent Document 1] Japanese Unexamined Patent Application, First Publication No. 2005-47942

### SUMMARY OF THE INVENTION

### TECHNICAL PROBLEM

However, as a result of research by the present inventors, it was found that the polyolefin-based resin composition disclosed in Patent Document 1 described above had room for improvement in terms of weather resistance and color tone controllability.

### SOLUTION TO PROBLEM

Further research by the present inventors revealed that it is possible to improve the weather resistance of a resin composition by adding a hindered amine light stabilizer and a photocatalyst to a synthetic resin. Further intensive research based on this finding revealed that it is possible to realize a resin composition having excellent color tone controllability by setting the added amount of the photocatalyst to a predetermined value or less, thereby completing the present invention.

According to one aspect of the present invention, the following resin composition, resin additive composition, resin structure, method for improving weather resistance, method for producing a resin composition, and hindered amine light stabilizer are provided.

1. A resin composition including a synthetic resin, a hindered amine light stabilizer, and a photocatalyst, in which a content of the photocatalyst is equal to or more than 0.001 parts by mass and less than 0.5 parts by mass with respect to 100 parts by mass of the synthetic resin.
2. The resin composition according to 1, in which the synthetic resin includes a polyolefin-based resin.
3. The resin composition according to 1 or 2, in which the synthetic resin includes a polyethylene-based resin.
4. The resin composition according to any one of 1 to 3, in which the synthetic resin does not include a polypropylene-based resin.
5. The resin composition according to any one of 1 to 4, in which the hindered amine light stabilizer includes a component having a molecular weight of less than 1500.
6. The resin composition according to any one of 1 to 5, in which the hindered amine light stabilizer includes a component having a molecular weight of 500 or more.
7. The resin composition according to any one of 1 to 6, in which the hindered amine light stabilizer has a piperidine ring, and the piperidine ring is a secondary amine.
8. The resin composition according to any one of 1 to 7, in which the hindered amine light stabilizer includes one or two or more compounds represented by General Formula (1), 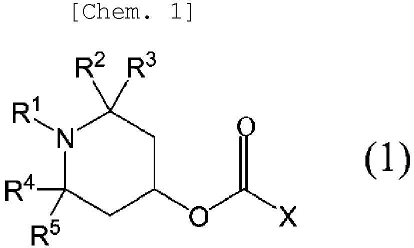 (in General Formula (1), R¹ represents a hydrogen atom, an alkyl group having 1 to 30 carbon atoms, or an alkoxy group having 1 to 30 carbon atoms, R² to R⁵ each independently represent a hydrogen atom or an alkyl group having 1 to 30 carbon atoms, and X represents a fatty acid residue having 7 to 29 carbon atoms, a group represented by General Formula (2), or a group represented by General Formula (3)), 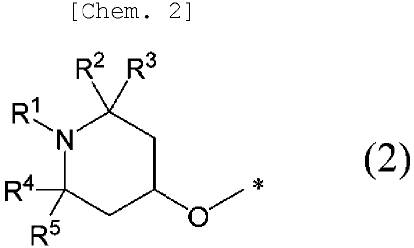 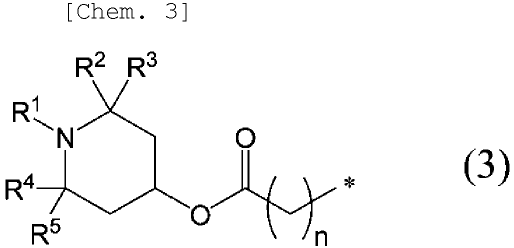 (in General Formulas (2) and (3), * represents a site bonded to a carbonyl group, and n represents an integer of 1 to 20).
9. The resin composition according to any one of 1 to 8, in which the hindered amine light stabilizer includes one or two or more selected from the group consisting of 1,6-bis(2,2,6,6-tetramethyl-4-piperidylamino)hexane/2,4-dichloro-6-tert-octylamino-s-triazine polycondensates, 1,6-bis(1,2,2,6,6-pentamethyl-4-piperidylamino)hexane/2,4-dichloro-6-tert-octylamino-s-triazine polycondensates, 1,6-bis(1,2,2,6,6-pentamethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-morpholino-s-triazine polycondensates, 1,2,3,4-butanetetracarboxylic acid/2,2-bis(hydroxymethyl)-1,3-propanediol/3-hydroxy-2,2-dimethylpropanal/2,2,6,6-tetramethyl-4-piperidinyl ester polycondensates, 1,2,3,4-butanetetracarboxylic acid/2,2-bis(hydroxymethyl)-1,3-propanediol/3-hydroxy-2,2-dimethylpropanal/1,2,2,6,6-pentamethyl-4-piperidinyl ester polycondensates, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(1,2,2,6,6-pentamethyl-4-piperidylamino)hexane/dibromoethane polycondensates, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-ylamino]undecane, 1,6,11-tris[2,4-bis(N-butyl-N-(1,2,2,6,6-pentamethyl-4-piperidyl)amino)-s-triazin-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, 2,2,4,4-tetramethyl-7-oxa-3,20-diazadispiro-[5.1.11.2]-heneicosan-21-one, poly{2,2,4,4-tetramethyl-7-oxa-3,20-diaza-20(2,3-epoxypropyl)dispiro-[5.1.11.2]-heneicosan-21-one}, and a compound represented by General Formula (5), 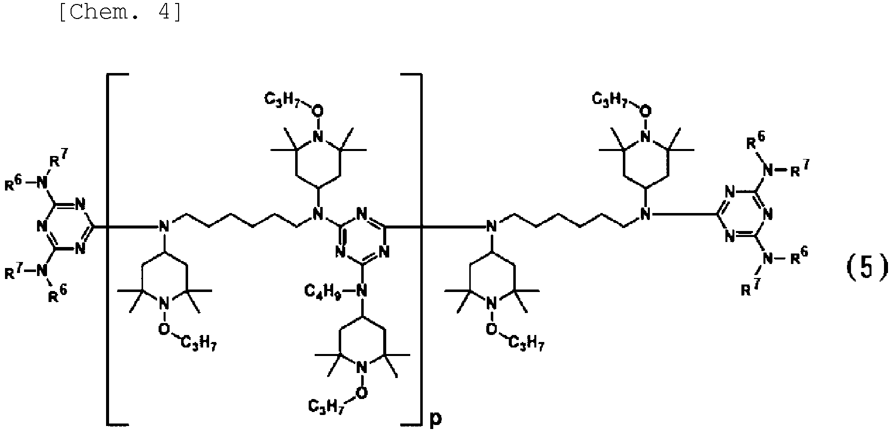 (in General Formula (5), R⁶ and R⁷ each independently represent an alkyl group having 1 to 30 carbon atoms or a 1-(n-propoxy)-2,2,6,6-tetramethylpiperidin-4-yl group, and p represents an integer of 0 or more).
10. The resin composition according to any one of 1 to 9, in which the photocatalyst includes titanium oxide.
11. The resin composition according to any one of 1 to 10, in which the resin composition does not include a colorant (except for the photocatalyst).
12. A resin additive composition used for producing the resin composition according to any one of 1 to 11 by being added to a synthetic resin, the resin additive composition including a hindered amine light stabilizer, and a photocatalyst.
13. A resin structure formed from the resin composition according to any one of 1 to 11.
14. A method for improving weather resistance of a resin composition including a synthetic resin, the method including a step of adding a hindered amine light stabilizer and a photocatalyst to the synthetic resin.
15. The method for improving weather resistance of a resin composition according to 14, in which an added amount of the photocatalyst is equal to or more than 0.001 parts by mass and less than 0.5 parts by mass with respect to 100 parts by mass of the synthetic resin.
16. A method for producing a resin composition, the method including a step of adding a hindered amine light stabilizer and a photocatalyst to a synthetic resin.
17. The method for producing a resin composition according to 16, in which an added amount of the photocatalyst is equal to or more than 0.001 parts by mass and less than 0.5 parts by mass with respect to 100 parts by mass of the synthetic resin.
18. A hindered amine light stabilizer for use in a resin composition, the resin composition including a synthetic resin, the hindered amine light stabilizer, and a photocatalyst, in which a content of the photocatalyst is equal to or more than 0.001 parts by mass and less than 0.5 parts by mass with respect to 100 parts by mass of the synthetic resin.
19. The hindered amine light stabilizer according to 18, further including a component having a molecular weight of less than 1500.
20. The hindered amine light stabilizer according to 18 or 19, further including a component having a molecular weight of 500 or more.
21. The hindered amine light stabilizer according to any one of 18 to 20, further including a piperidine ring, in which the piperidine ring is a secondary amine.
22. The hindered amine light stabilizer according to any one of 18 to 21, further including one or two or more compounds represented by General Formula (1), 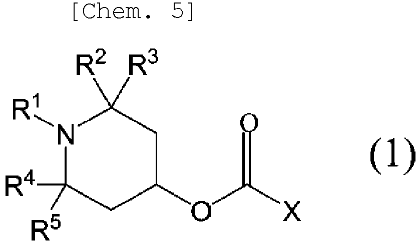 (in General Formula (1), R¹ represents a hydrogen atom, an alkyl group having 1 to 30 carbon atoms, or an alkoxy group having 1 to 30 carbon atoms, R² to R⁵ each independently represent a hydrogen atom or an alkyl group having 1 to 30 carbon atoms, and X represents a fatty acid residue having 7 to 29 carbon atoms, a group represented by General Formula (2), or a group represented by General Formula (3)), 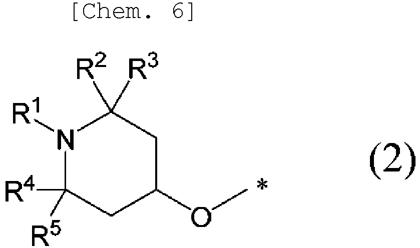 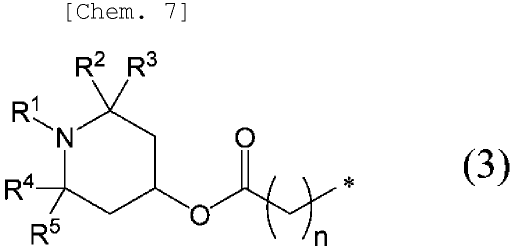 (in General Formulas (2) and (3), * represents a site bonded to a carbonyl group, and n represents an integer of 1 to 20).
23. The hindered amine light stabilizer according to any one of 18 to 22, further including one or two or more selected from the group consisting of 1,6-bis(2,2,6,6-tetramethyl-4-piperidylamino)hexane/2,4-dichloro-6-tert-octylamino-s-triazine polycondensates, 1,6-bis(1,2,2,6,6-pentamethyl-4-piperidylamino)hexane/2,4-dichloro-6-tert-octylamino-s-triazine polycondensates, 1,6-bis(1,2,2,6,6-pentamethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-morpholino-s-triazine polycondensates, 1,2,3,4-butanetetracarboxylic acid/2,2-bis(hydroxymethyl)-1,3-propanediol/3-hydroxy-2,2-dimethylpropanal/2,2,6,6-tetramethyl-4-piperidinyl ester polycondensates, 1,2,3,4-butanetetracarboxylic acid/2,2-bis(hydroxymethyl)-1,3-propanediol/3-hydroxy-2,2-dimethylpropanal/1,2,2,6,6-pentamethyl-4-piperidinyl ester polycondensates, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(1,2,2,6,6-pentamethyl-4-piperidylamino)hexane/dibromoethane polycondensates, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-ylamino]undecane, 1,6,11-tris[2,4-bis(N-butyl-N-(1,2,2,6,6-pentamethyl-4-piperidyl)amino)-s-triazin-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, 2,2,4,4-tetramethyl-7-oxa-3,20-diazadispiro-[5.1.11.2]-heneicosan-21-one, poly{2,2,4,4-tetramethyl-7-oxa-3,20-diaza-20(2,3-epoxypropyl)dispiro-[5.1.11.2]-heneicosan-21-one}, and a compound represented by General Formula (5), 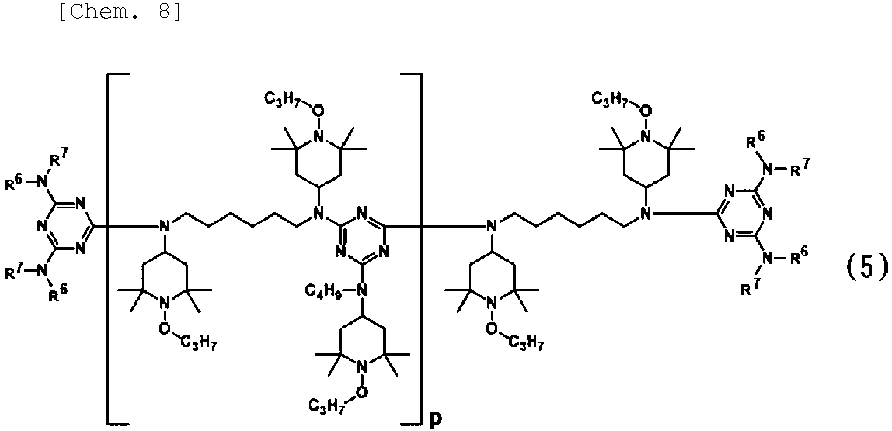 (in General Formula (5), R⁶ and R⁷ each independently represent an alkyl group having 1 to 30 carbon atoms or a 1-(n-propoxy)-2,2,6,6-tetramethylpiperidin-4-yl group, and p represents an integer of 0 or more).

### ADVANTAGEOUS EFFECTS OF INVENTION

According to the present invention, there are provided a resin composition which has excellent weather resistance and color tone controllability, a resin additive composition, a resin structure, a method for improving weather resistance, a method for producing a resin composition, and a hindered amine light stabilizer.

### DESCRIPTION OF EMBODIMENTS

An overview will be given of the resin composition of the present embodiment.

The resin composition of the present embodiment has a composition including a synthetic resin, a hindered amine light stabilizer, and a photocatalyst, in which a content of the photocatalyst is equal to or more than 0.001 parts by mass and less than 0.5 parts by mass with respect to 100 parts by mass of the synthetic resin.

The present inventors found that photocatalysts act as auxiliary agents for hindered amine light stabilizers.

As a result of further research based on this finding, the present inventors were able to realize an improvement in the weather resistance of a resin composition by adding a hindered amine light stabilizer and a photocatalyst to a synthetic resin.

Although the detailed mechanism is unclear, the nitroxyl radical (-NO•) species of the hindered amine light stabilizer is regenerated by oxidation caused by the holes of the photocatalyst generated by light irradiation. That is, the nitroxyl radical (-NO•) species of the hindered amine light stabilizer reacts with the deterioration factor (R•) of the resin generated by light irradiation to become a (-NOR) species, but this (-NOR) species is oxidized by the holes of the photocatalyst generated under light irradiation and becomes the (-NO•) species again. It is considered that this makes it possible to stably express the weather resistance effect.

According to the present embodiment, based on the above-described finding regarding the regeneration mechanism of the nitroxyl radical (-NO•) species, it is possible to provide a method for improving the weather resistance of a resin composition including a synthetic resin (a method for improving weather resistance), the method including a step of adding a hindered amine light stabilizer and a photocatalyst to the synthetic resin.

In addition, according to the finding of the present inventors, increasing the added amount of the photocatalyst makes it possible to improve the weather resistance of a resin composition including a synthetic resin and a hindered amine light stabilizer, while increasing the light reflectivity of the resin composition. As a result, when a resin composition is colored by a method such as adding a pigment, the reflection and scattering of light influence the color tone, making it difficult to give the resin structure formed from the resin composition the desired color tone. That is, when the added amount of the photocatalyst is increased, there is a concern that the color tone controllability of the resin composition may decrease.

From the viewpoint of this color tone controllability, in the resin composition including a synthetic resin and a hindered amine light stabilizer in the present embodiment, the content of the photocatalyst is preferably less than 0.5 parts by mass with respect to 100 parts by mass of the synthetic resin.

From the viewpoint of such weather resistance and color tone controllability, according to the present embodiment, it is possible to provide a method for improving the weather resistance and color tone controllability of a resin composition including a synthetic resin (method for improving weather resistance and color tone controllability), the method including a step of adding a hindered amine light stabilizer and a photocatalyst to a synthetic resin such that the added amount of the photocatalyst is equal to or more than 0.001 parts by mass and less than 0.5 parts by mass with respect to 100 parts by mass of the synthetic resin.

A detailed description will be given below of the composition of the resin composition of the present embodiment.

The resin composition of the present embodiment includes at least a synthetic resin, a hindered amine light stabilizer, and a photocatalyst.

Examples of the synthetic resin include a thermoplastic resin, a thermosetting resin, and the like.

Examples of thermoplastic resins include crystalline resins such as polyolefin-based resins, polyamide-based resins, polyester-based resins, polyacetal resins, polylactic acid, and polyphenylene sulfide; amorphous resins such as polycarbonate resins, styrene-based resins, acrylic-based resins, urethane-based resins, halogen-containing resins, petroleum resins, coumarone resins, polyvinyl alcohol, polyvinyl acetate, and polyphenylene oxide; thermoplastic elastomers; and the like.

In addition, examples of thermosetting resins include phenol resins, urea resins, melamine resins, epoxy resins, unsaturated polyester resins, synthetic rubber, and the like. Synthetic resins may be included alone or in a combination of two or more.

In addition, the synthetic resins may be copolymers or polymer alloys.

The synthetic resin is preferably a thermoplastic resin and more preferably includes a crystalline resin. In addition, the synthetic resin preferably includes a polyolefin-based resin. Examples of polyolefin-based resins include polyethylene-based resins such as low-density polyethylene, linear low-density polyethylene, high-density polyethylene, cross-linked polyethylene, and ultra-high molecular weight polyethylene; polypropylene-based resins such as homopolypropylene, random copolymer polypropylene, block copolymer polypropylene, impact copolymer polypropylene, high impact copolymer polypropylene, and maleic anhydride-modified polypropylene; α-olefin polymers such as polybutene-1, cycloolefin polymers, poly-3-methyl-1-butene, poly-3-methyl-1-pentene, and poly-4-methyl-1-pentene; α-olefin copolymers such as ethylene-methyl methacrylate copolymers and ethylene-vinyl acetate copolymers; and the like. Here, for the polyolefin-based resin, the molecular weight, degree of polymerization, density, softening point, ratio of insoluble matter in the solvent, degree of stereoregularity, presence or absence of catalyst residue, type and blending ratio of monomers as raw materials, type of catalyst used in the polymerization (for example, Ziegler catalyst, metallocene catalyst, and the like), and the like are not particularly limited and are selected as appropriate. In addition, polypropylene-based resins are particularly preferable among polyolefin-based resins. Furthermore, the synthetic resin may include a polyethylene-based resin or may be formed only of a polyethylene-based resin. The synthetic resin may not include a polypropylene-based resin.

The hindered amine light stabilizer preferably includes at least a component having a molecular weight of less than 1500. In this case, when a resin structure having a large thickness (for example, a thickness of 2 mm or more) is formed from the resin composition, the weather resistance of the formed resin structure is particularly excellent. The hindered amine light stabilizer preferably includes at least a component having a molecular weight of 1000 or less, more preferably includes at least a component having a molecular weight of 800 or less, and even more preferably includes at least a component having a molecular weight of 500 or less.

The hindered amine light stabilizer may include at least a component having a molecular weight of 500 or more. In this case, when a resin structure having a small thickness (for example, a thickness of 0.2 mm or less) is formed from the resin composition, the weather resistance of the formed resin structure is particularly excellent. The hindered amine light stabilizer preferably includes at least a component having a molecular weight of 800 or more, more preferably includes at least a component having a molecular weight of 1000 or more, and even more preferably includes at least a component having a molecular weight of 1500 or more.

The hindered amine light stabilizer may include only one of a component having a molecular weight of less than 1500 and a component having a molecular weight of 1500 or more or may include both a component having a molecular weight of less than 1500 and a component having a molecular weight of 1500 or more.

In addition, the hindered amine light stabilizer has a piperidine ring, the piperidine ring preferably being a secondary amine.

The hindered amine light stabilizer may include, for example, one or two or more compounds represented by General Formula (1).

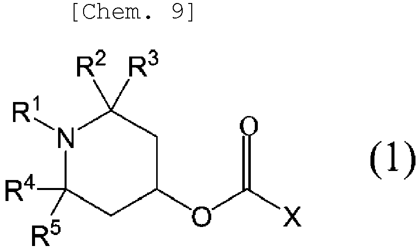

In General Formula (1), R¹ represents a hydrogen atom, an alkyl group having 1 to 30 carbon atoms, or an alkoxy group having 1 to 30 carbon atoms, R² to R⁵ each independently represent a hydrogen atom or an alkyl group having 1 to 30 carbon atoms, and X represents a fatty acid residue having 7 to 29 carbon atoms, a group represented by General Formula (2), or a group represented by General Formula (3).

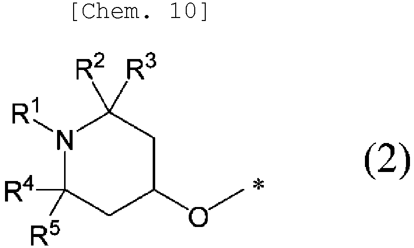

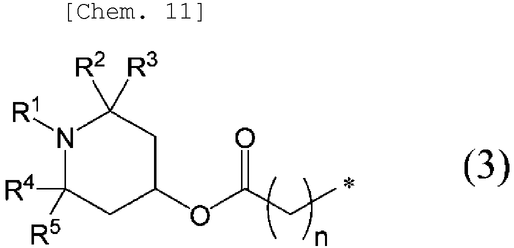

In General Formulas (2) and (3), * represents a site bonded to a carbonyl group, and n represents an integer of 1 to 20.

Examples of alkyl groups having 1 to 30 carbon atoms include linear alkyl groups such as methyl groups, ethyl groups, n-propyl groups, n-butyl groups, n-pentyl groups, n-hexyl groups, n-heptyl groups, n-octyl groups, n-nonyl groups, n-decyl groups, n-dodecyl groups, n-tetradecyl groups, n-hexadecyl groups, n-octadecyl groups, n-eicosyl groups, n-docosyl groups, and n-triacontyl groups, branched alkyl groups such as isopropyl groups, isobutyl groups, sec-butyl groups, tert-butyl groups, isopentyl groups, neopentyl groups, tert-amyl groups, 2-heptyl groups, tert-heptyl groups, 2-ethylhexyl groups, tert-octyl groups, isononyl groups, isodecyl groups, and 3,5,5-trimethylhexyl groups, cyclic alkyl groups such as cyclopentyl groups, cyclohexyl groups, cyclooctyl groups, and adamantyl groups, and the like.

Examples of the alkoxy groups having 1 to 30 carbon atoms include groups having a structure in which the above-described alkyl group having 1 to 30 carbon atoms is bonded to an oxygen atom, and the like.

Fatty acid residues having 7 to 29 carbon atoms are residues obtained by removing the carboxyl group from fatty acids having 8 to 30 carbon atoms and examples of such residues include n-heptyl groups, n-octyl groups, n-nonyl groups, n-decyl groups, n-undecyl groups, n-dodecyl groups, n-tridecyl groups, n-tetradecyl groups, n-pentadecyl groups, n-hexadecyl groups, n-heptadecyl groups, n-octadecyl groups, n-nonadecyl groups, n-eicosyl groups, n-henicosyl groups, n-docosyl groups, n-tricosyl groups, n-pentacosyl groups, n-heptacosyl groups, n-nonacodecyl groups, and the like.

In General Formula (1), R¹ is preferably a hydrogen atom, an alkyl group having 1 to 20 carbon atoms, or an alkoxy group having 1 to 20 carbon atoms, more preferably a hydrogen atom or an alkyl group having 1 to 20 carbon atoms, even more preferably a hydrogen atom or an alkyl group having 1 to 6 carbon atoms, yet more preferably a hydrogen atom or a methyl group, and particularly preferably a methyl group.

In General Formula (1), R² to R⁵ are each independently preferably a hydrogen atom or an alkyl group having 1 to 6 carbon atoms, more preferably a hydrogen atom, a methyl group, an isopropyl group, a tert-butyl group, or a tert-pentyl group, even more preferably a hydrogen atom or a methyl group, and yet more preferably a methyl group.

In General Formula (1), X is preferably a fatty acid residue having 9 to 25 carbon atoms and more preferably a fatty acid residue having 11 to 21 carbon atoms. In addition, X is preferably a residue obtained by removing a carboxyl group from a saturated fatty acid.

The alkyl group, alkoxy group, and fatty acid residue may or may not have a substituent group. When these groups have a substituent group, examples of the substituent group include halogen atoms such as fluorine atoms, chlorine atoms, bromine atoms, and iodine atoms, hydroxyl groups, nitro groups, cyano groups, amino groups, and the like.

R¹ to R⁵ in General Formulas (2) and (3) include the examples given for General Formula (1).

In addition, in General Formula (3), n is preferably an integer of 2 to 18, more preferably an integer of 4 to 14, and even more preferably an integer of 6 to 10.

Specific examples of the compound represented by General Formula (1) include the following Compound No. 1 to Compound No. 11.

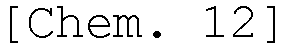

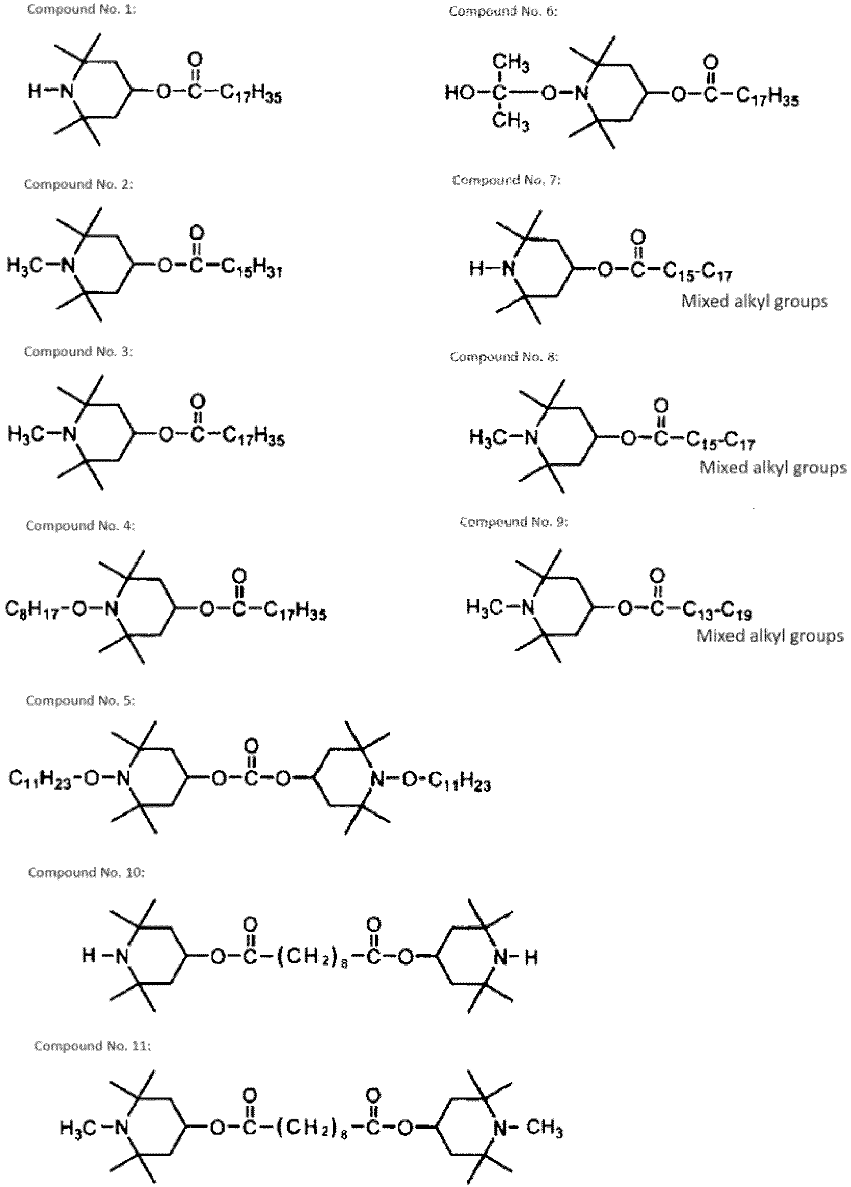

In addition, hindered amine light stabilizers may include one or two or more selected from the group consisting of 1,6-bis(2,2,6,6-tetramethyl-4-piperidylamino)hexane/2,4-dichloro-6-tert-octylamino-s-triazine polycondensates, 1,6-bis(1,2,2,6,6-pentamethyl-4-piperidylamino)hexane/2,4-dichloro-6-tert-octylamino-s-triazine polycondensates, 1,6-bis(2,2,6,6-tetramethyl-4-piperidylamino)hexane/2,4-dichloro-6-morpholino-s-triazine polycondensates, 1,6-bis(1,2,2,6,6-pentamethyl-4-piperidylamino)hexane/2,4-dichloro-6-morpholino-s-triazine polycondensates, 1,2,3,4-butanetetracarboxylic acid/2,2-bis(hydroxymethyl)-1,3-propanediol/3-hydroxy-2,2-dimethylpropanal/2,2,6,6-tetramethyl-4-piperidinyl ester polycondensates, 1,2,3,4-butanetetracarboxylic acid/2,2-bis(hydroxymethyl)-1,3-propanediol/3-hydroxy-2,2-dimethylpropanal/1,2,2,6,6-pentamethyl-4-piperidinyl ester polycondensates, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(1,2,2,6,6-pentamethyl-4-piperidylamino)hexane/dibromoethane polycondensates, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-ylamino]undecane, 1,6,11-tris[2,4-bis(N-butyl-N-(1,2,2,6,6-pentamethyl-4-piperidyl)amino)-s-triazin-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, 2,2,4,4-tetramethyl-7-oxa-3,20-diazadispiro-[5.1.11.2]-heneicosan-21-one, poly{2,2,4,4-tetramethyl-7-oxa-3,20-diaza-20(2,3-epoxypropyl)dispiro-[5.1.11.2]-heneicosan-21-one}, and a compound represented by General Formula (5).

In the resin composition of the present embodiment, the hindered amine light stabilizer preferably includes one or two or more selected from the group consisting of 1,6-bis(2,2,6,6-tetramethyl-4-piperidylamino)hexane/2,4-dichloro-6-tert-octylamino-s-triazine polycondensates, 1,6-bis(2,2,6,6-tetramethyl-4-piperidylamino)hexane/2,4-dichloro-6-morpholino-s-triazine polycondensates, 1,2,3,4-butanetetracarboxylic acid/2,2-bis(hydroxymethyl)-1,3-propanediol/3-hydroxy-2,2-dimethylpropanal/2,2,6,6-tetramethyl-4-piperidinyl ester polycondensates, 1,2,3,4-butanetetracarboxylic acid/2,2-bis(hydroxymethyl)-1,3-propanediol/3-hydroxy-2,2-dimethylpropanal/1,2,2,6,6-pentamethyl-4-piperidinyl ester polycondensates, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, poly{2,2,4,4-tetramethyl-7-oxa-3,20-diaza-20(2,3-epoxypropyl)dispiro-[5.1.11.2]-heneicosan-21-one} and a compound represented by General Formula (5); more preferably includes one or two or more selected from the group consisting of 1,6-bis(2,2,6,6-tetramethyl-4-piperidylamino)hexane/2,4-dichloro-6-tert-octylamino-s-triazine polycondensates, 1,6-bis(2,2,6,6-tetramethyl-4-piperidylamino)hexane/2,4-dichloro-6-morpholino-s-triazine polycondensates, 1,2,3,4-butanetetracarboxylic acid/2,2-bis(hydroxymethyl)-1,3-propanediol/3-hydroxy-2,2-dimethylpropanal/2,2,6,6-tetramethyl-4-piperidinyl ester polycondensates, 1,6-bis(2,2,6,6-tetramethyl-4-piperidylamino)hexane/dibromoethane polycondensates, 1,5,8,12-tetrakis[2,4-bis(N-butyl-N-(2,2,6,6-tetramethyl-4-piperidyl)amino)-s-triazin-6-yl]-1,5,8,12-tetraazadodecane and poly{2,2,4,4-tetramethyl-7-oxa-3,20-diaza-20(2,3-epoxypropyl) dispiro-[5.1.11.2]-heneicosan-21-one}; even more preferably includes one or two or more selected from the group consisting of 1,6-bis(2,2,6,6-tetramethyl-4-piperidylamino)hexane/2,4-dichloro-6-tert-octylamino-s-triazine polycondensates, 1,6-bis(2,2,6,6-tetramethyl-4-piperidylamino)hexane/2,4-dichloro-6-morpholino-s-triazine polycondensates, 1,2,3,4-butanetetracarboxylic acid/2,2-bis(hydroxymethyl)-1,3-propanediol/3-hydroxy-2,2-dimethylpropanal/2,2,6,6-tetramethyl-4-piperidinyl ester polycondensates, 1,6-bis(2,2,6,6-tetramethyl-4-piperidylamino)hexane/dibromoethane polycondensates, and 1,5,8,12-tetrakis[2,4-bis(N-butyl-N-(2,2,6,6-tetramethyl-4-piperidyl)amino)-s-triazin-6-yl]-1,5,8,12-tetraazadodecane; yet more preferably includes one or two or more selected from the group consisting of 1,6-bis(2,2,6,6-tetramethyl-4-piperidylamino)hexane/2,4-dichloro-6-tert-octylamino-s-triazine polycondensates, and 1,6-bis(2,2,6,6-tetramethyl-4-piperidylamino)hexane/2,4-dichloro-6-morpholino-s-triazine polycondensates; and particularly preferably includes 1,6-bis(2,2,6,6-tetramethyl-4-piperidylamino)hexane/2,4-dichloro-6-tert-octylamino-s-triazine polycondensates.

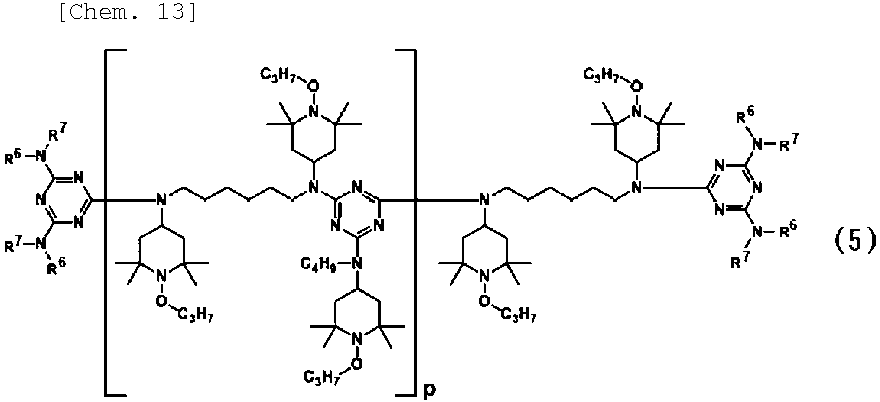

In General Formula (5), R⁶ and R⁷ each independently represent an alkyl group having 1 to 30 carbon atoms or a 1-(n-propoxy)-2,2,6,6-tetramethylpiperidin-4-yl group. In addition, p is an integer of 0 or more and is able to be set to 0 to 10, for example. Here, examples of the alkyl group having 1 to 30 carbon atoms include linear alkyl groups such as methyl groups, ethyl groups, n-propyl groups, n-butyl groups, n-pentyl groups, n-hexyl groups, n-heptyl groups, n-octyl groups, n-nonyl groups, n-decyl groups, n-dodecyl groups, n-tetradecyl groups, n-hexadecyl groups, n-octadecyl groups, n-eicosyl groups, n-docosyl groups, and n-triacontyl group; branched alkyl groups such as isopropyl groups, isobutyl groups, sec-butyl groups, tert-butyl groups, isopentyl groups, neopentyl groups, tert-amyl groups, 2-heptyl groups, tert-heptyl groups, 2-ethylhexyl groups, tert-octyl groups, isononyl groups, isodecyl groups, and 3,5,5-trimethylhexyl groups, and cyclic alkyl groups such as cyclopentyl groups, cyclohexyl groups, cyclooctyl groups, and adamantyl groups, and the like.

Specific examples of the compound represented by General Formula (5) include the following Compound No. 12 and Compound No. 13, and the like.

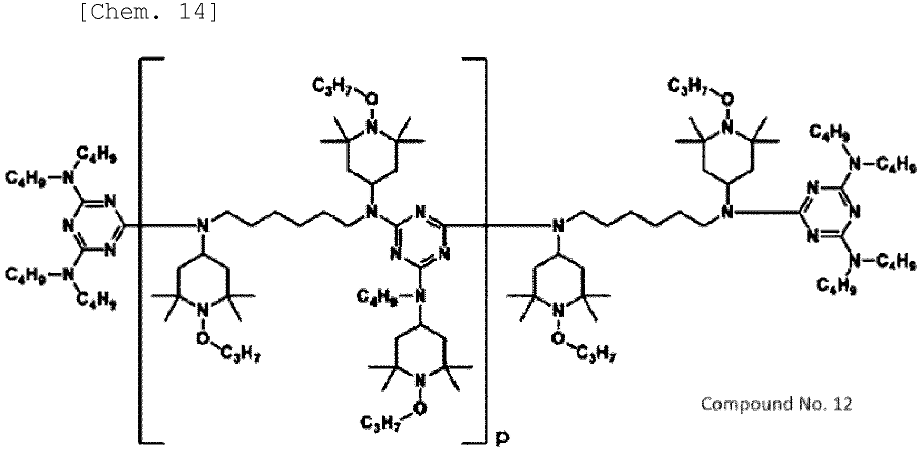

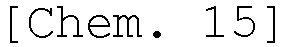

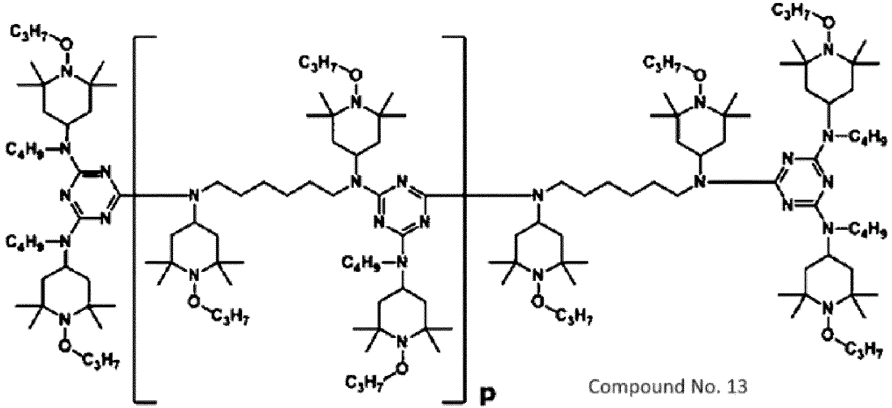

The content of the hindered amine light stabilizer in the resin composition may be, for example, equal to or more than 0.001 parts by mass and equal to or less than 5 parts by mass with respect to 100 parts by mass of the synthetic resin, preferably equal to or more than 0.005 parts by mass and equal to or less than 3 parts by mass, more preferably equal to or more than 0.01 parts by mass and equal to or less than 0.3 parts by mass, and even more preferably equal to or more than 0.02 parts by mass and equal to or less than 0.1 parts by mass. By setting the content of the hindered amine light stabilizer in the resin composition in the above range, it is possible to improve the weather resistance of the resin composition. In addition, by setting the content of the hindered amine light stabilizer in the resin composition in the above range, it is possible to sufficiently suppress blooming or bleeding of the hindered amine light stabilizer from the resin composition.

In addition, in another embodiment, it is possible to use the hindered amine light stabilizer for blending into a resin composition having weather resistance as described above. That is, as a hindered amine light stabilizer for use in a resin composition, it is possible to use the hindered amine light stabilizer including a synthetic resin, a hindered amine light stabilizer, and a photocatalyst, in which the content of the photocatalyst is equal to or more than 0.001 parts by mass and less than 0.5 parts by mass with respect to 100 parts by mass of the synthetic resin.

The photocatalyst is a semiconductor having a band gap corresponding to the wavelengths of ultraviolet and visible light. Examples of the photocatalyst included in the resin composition of the present embodiment include metal oxides such as titanium oxide, zinc oxide, tungsten oxide, tin oxide, niobium oxide, or strontium titanate. From the viewpoint of obtaining superior weather resistance in the resin composition, the photocatalyst preferably includes titanium oxide, zinc oxide, or tungsten oxide, more preferably includes titanium oxide or zinc oxide, and even more preferably includes titanium oxide. The metal oxide may be used alone or in a combination of two or more.

When the photocatalyst includes titanium oxide, the titanium oxide may be, for example, rutile titanium oxide, anatase titanium oxide, a mixture of rutile titanium oxide and anatase titanium oxide, or the like. From the viewpoint of further improving the weather resistance of the resin composition, the titanium oxide preferably includes rutile titanium oxide and the titanium oxide is particularly preferably formed only of rutile titanium oxide.

As the photocatalyst, it is possible to use particles having surfaces subjected to an inorganic treatment and/or an organic treatment or particles not subjected to such a surface treatment. In addition, in the photocatalyst, iron, copper, and the like may be supported on the surface of the particles.

The average particle size of the photocatalyst particles is, for example, equal to or more than 0.01 µm and equal to or less than 1.00 µm, preferably equal to or more than 0.03 µm and equal to or less than 0.50 µm, more preferably equal to or more than 0.05 µm and equal to or less than 0.40 µm, even more preferably equal to or more than 0.10 µm and equal to or less than 0.30 µm, and yet more preferably equal to or more than 0.15 µm and equal to or less than 0.25 µm. By setting the average particle size in this range, it is possible to improve the dispersibility of the photocatalyst in the resin composition. In addition, by setting the average particle size in this range, it is possible to sufficiently suppress the reflection and scattering of light by the photocatalyst in the resin composition and to improve the color tone controllability of the resin composition.

In the present embodiment, the average particle size of the photocatalyst particles represents the average value (µm) of 100 particles measured by observation with an electron microscope.

The content of the photocatalyst in the resin composition is equal to or more than 0.001 parts by mass and less than 0.5 parts by mass with respect to 100 parts by mass of the synthetic resin, preferably equal to or more than 0.003 parts by mass and equal to or less than 0.3 parts by mass, more preferably equal to or more than 0.005 parts by mass and equal to or less than 0.1 parts by mass, even more preferably equal to or more than 0.007 parts by mass and equal to or less than 0.05 parts by mass, yet more preferably equal to or more than 0.008 parts by mass and equal to or less than 0.03 parts by mass, and particularly preferably equal to or more than 0.01 parts by mass and equal to or less than 0.02 parts by mass. By setting the content of the photocatalyst in the resin composition in the above range, it is possible to improve the weather resistance of the resin composition. In addition, by setting the content of the photocatalyst in the resin composition in the above range, it is possible to sufficiently suppress the reflection and scattering of light by the photocatalyst in the resin composition and to improve the color tone controllability of the resin composition.

When the content of the photocatalyst in the resin composition is A (mass%) and the content of the hindered amine light stabilizer is B (mass%), the value of A/B is, for example, equal to or more than 0.001 and equal to or less than 10, preferably equal to or more than 0.005 and equal to or less than 1.0, more preferably equal to or more than 0.01 and equal to or less than 0.6, even more preferably equal to or more than 0.05 and equal to or less than 0.5, and yet more preferably equal to or more than 0.1 and equal to or less than 0.3. By setting the value of A/B in the above range, it is possible to achieve a balance between weather resistance and color tone controllability in the resin composition.

In the present embodiment, it is possible for the resin composition to include other additive components in addition to the components described above, as necessary. Examples of other additive components include antioxidants such as phenol-based antioxidants, phosphorus-based antioxidants, and sulfur-based antioxidants, ultraviolet absorbers, benzoate-based light stabilizers, fatty acid metal salts, dispersants, lubricants, hydrotalcites, flame retardants, flame retardant auxiliary agents, fillers, antistatic agents, fluorescent brightening agents, colorants, curing promotion catalysts, organic solvents, water, anti-yellowing agents, leveling agents, defoamers, thickeners, anti-settling agents, anti-fogging agents, and the like. Here, examples of colorants include pigments, dyes, and the like. The resin composition of the present embodiment preferably does not include a colorant (except for the photocatalyst). That is, the resin composition of the present embodiment is preferably not colored.

Next, a description will be given of one of the characteristics of the resin composition.

The resin composition is molded into a plate-shaped molded product having a thickness of 2 mm, the relative diffuse reflectance spectrum of this molded product is measured using barium sulfate as a standard white plate, and the relative diffuse reflectance (%) at a wavelength of 370 nm is set as ρ₁ and the relative diffuse reflectance (%) at a wavelength of 420 nm is set as ρ₂.

In this case, the value of ρ₂/ρ₁ may be, for example, equal to or more than 0.80 and equal to or less than 8.0, preferably equal to or more than 0.95 and equal to or less than 7.0, more preferably equal to or more than 1.00 and equal to or less than 5.00, even more preferably equal to or more than 1.20 and equal to or less than 3.00, yet more preferably equal to or more than 1.30 and equal to or less than 2.50, and particularly preferably equal to or more than 1.50 and equal to or less than 2.00. When the value of ρ₂/ρ₁ is in the above range, it is possible to further improve the weather resistance of the resin composition. In addition, when the value of ρ₂/ρ₁ is in the above range, the reflection and scattering of light in the visible light wavelength region is suppressed, thus, it is possible to improve the color tone controllability of the resin composition.

In addition, the value of ρ₁ may be, for example, equal to or more than 0% and equal to or less than 20%, preferably equal to or more than 0.5% and equal to or less than 16%, more preferably equal to or more than 1% and equal to or less than 15%, even more preferably equal to or more than 3% and equal to or less than 12%, and yet more preferably equal to or more than 5% and equal to or less than 11%. Since 370 nm is a wavelength that contributes to photodegradation in synthetic resins, setting the value of ρ₁ in the above range makes it possible to further improve the weather resistance of the resin composition.

The method for producing a resin composition of the present embodiment is not particularly limited and it is possible to adopt any method known in the related art.

The method for producing a resin composition includes a step of adding a hindered amine light stabilizer and a photocatalyst to a synthetic resin. In the addition step of the method for producing a resin composition, the added amount of the photocatalyst is preferably equal to or more than 0.001 parts by mass and less than 0.5 parts by mass with respect to 100 parts by mass of the synthetic resin.

One example of the method for producing a resin composition is a method in which the synthetic resin, the hindered amine light stabilizer, the photocatalyst, and other additive components, as necessary, are mixed in advance using various mixers such as a tumbler mixer or an FM mixer and then melt-kneaded using a Banbury mixer, a roll mill, a Brabender, a single-screw kneading extruder, a twin-screw kneading extruder, a kneader, or the like. Here, the melt-kneading temperature may be, for example, a processing temperature of 100°C to 280°C.

In addition, the resin composition may be produced without mixing each of the components in advance or by mixing only some of the components in advance, supplying the components to an extruder using a feeder, and carrying out melt-kneading. Furthermore, it is also possible to produce the resin composition using a resin composition obtained by mixing some of the components in advance, supplying the components to an extruder, carrying out melt-kneading as a master batch, and carrying out the mixing and melt-kneading again with other components.

In addition, the synthetic resin used in the mixing and kneading step may have a predetermined form such as powder, pellets, or fibers.

The resin composition of the present embodiment may be solid, for example, and, in terms of form, may have a specific form such as powder, granules, pellets, briquettes, tablets, or sheets. In addition, the resin composition of the present embodiment may be liquid, slurry, emulsion, or paste.

The resin additive composition of the present embodiment is an additive used to produce the above-described resin composition by being added to a synthetic resin. The resin additive composition includes at least a hindered amine light stabilizer and a photocatalyst.

Examples of the forms of the resin additive composition include pellets, pills, powder, and the like. From the viewpoint of suppressing exudation of the components, among the above, pellets or pills are preferable and pellets are particularly preferable.

Examples of the hindered amine included in the resin additive composition include the same examples as for the above-described hindered amine included in the resin composition. In addition, examples of the photocatalyst included in the resin additive composition include the same examples as for the photocatalyst included in the above-described resin composition.

When the content of the photocatalyst in the resin additive composition is A' (mass%) and the content of the hindered amine light stabilizer is B' (mass%), the value of A'/B' may be in the same numerical range as the value of A/B in the above-described resin composition.

In addition, the resin additive composition may not include a synthetic resin, but may be a master batch further including a synthetic resin in addition to the hindered amine light stabilizer and the photocatalyst.

When the resin additive composition is a master batch including a synthetic resin, the content of the hindered amine light stabilizer in the resin additive composition is not particularly limited, but may be, for example, an amount of more than 10 parts by mass with respect to 100 parts by mass of the synthetic resin. When the resin additive composition is a master batch including a synthetic resin, the content of the hindered amine light stabilizer in the resin additive composition is preferably an amount of more than 20 parts by mass, more preferably 25 parts by mass or more, even more preferably 30 parts by mass or more, and yet more preferably 40 parts by mass or more.

Furthermore, the resin additive composition may include additive components other than the hindered amine light stabilizer and photocatalyst, exemplified as components able to be included in the above-described resin composition as necessary.

The resin structure of the present embodiment is not particularly limited other than being formed from the above-described resin composition.

The resin structure may be formed of the resin composition in part or entirely. However, the resin structure is preferably entirely formed of the resin composition.

Specific examples of the resin structure include molded products obtained by molding the resin composition, coating films obtained by curing coating material formed of the resin composition, and the like.

Among the above, molded products obtained by molding the resin composition are preferable.

Here, examples of molded products include injection molded products, fibers, biaxially stretched films, uniaxially stretched films, non-stretched films, sheets, thermoforming molded products, extrusion blow molded products, injection blow molded products, injection stretch blow molded products, profile extrusion molded products, rotational molded products, and the like, more specifically, vehicle parts, building materials, agricultural materials, films, sheets, and the like. In addition, examples of the coating film include coating films obtained by forming a coating layer by coating a coating material formed of a resin composition on a base material formed of metals such as zinc-plated steel sheets, zinc alloy-plated steel sheets, stainless steel sheets, and tin-plated steel sheets, resins such as polymethylmethacrylate resin, polycarbonate resin, polyester resin, polystyrene resin, ABS resin, AS resin, polyamide resin, polyarylate resin, polymethacrylimide resin, and polyallyl diglycol carbonate resin, or the like, by a known method such as brush coating, bar coating, spray coating, dip coating, spin coating, or curtain coating, and then curing the coating layer by a known method such as room temperature curing, heat curing, and ultraviolet irradiation, and the like.

The embodiments of the present invention are described above, but the above are merely examples of the present invention and it is possible to adopt various other configurations. In addition, the present invention is not limited to the above-described embodiments and modifications, improvements, and the like in a range in which it is possible to achieve the object of the present invention are included in the present invention.

### Examples

A detailed description will be given below of the present invention with reference to Examples, but the present invention is not limited to the descriptions of these Examples.

(Examples 1 to 10, Comparative Examples 1 to 6)

### <Production of Resin Composition>

100 parts by mass of the below-described synthetic resin, a hindered amine light stabilizer and a photocatalyst in the blending ratios shown in Table 1 or Table 2, 0.1 parts by mass of tetrakis[methylene-3-(3',5'-di-tert-butyl-4'-hydroxyphenyl)propionate]methane as a phenol-based antioxidant, 0.1 parts by mass of tris(2,4-di-tert-butylphenyl)phosphite as a phosphorus-based antioxidant, and 0.1 parts by mass of calcium stearate as a fatty acid metal salt were blended and mixed using an FM mixer and then the obtained mixture was melt-kneaded using a twin-screw extruder (TEX28V, manufactured by Japan Steel Works, Ltd.) under conditions of a melt temperature of 230°C and a screw speed of 150 rpm, granulated, and then dried at 60°C for 8 hours to produce a pellet-shaped resin composition.

Here, in Table 1 and Table 2, the unit of the blending ratio of each component is parts by mass.

The raw material information listed in Table 1 and Table 2 is shown below.

### (Synthetic Resins)

- Synthetic resin 1: Homopolypropylene (MFR (230°C, 2.16 kg) = 10 g/10 min)

### (Hindered Amine Light stabilizer)

- Hindered amine light stabilizer 1: Compound No. 7 above
- Hindered amine light stabilizer 2: Compound No. 8 above
- Hindered amine light stabilizer 3: Compound No. 5 above
- Hindered amine light stabilizer 4: Compound No. 10 above
- Hindered amine light stabilizer 5: Hindered amine compound (molecular weight 2000-3300) represented by chemical formula (4)

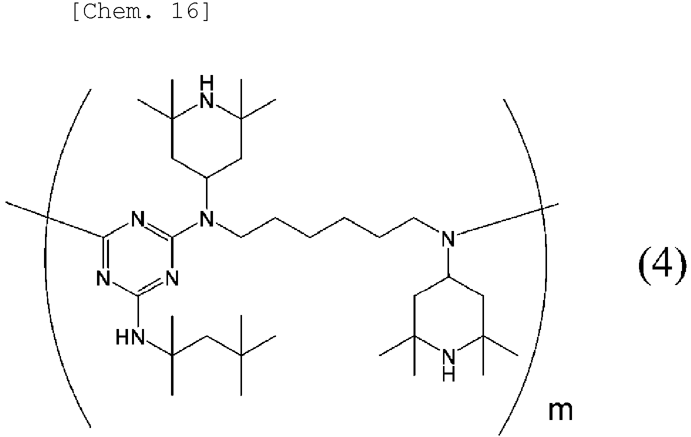

### (Photocatalyst)

- Titanium oxide 1: Titanium oxide particles (CR-63, manufactured by Ishihara Sangyo Kaisha, Ltd., rutile, particle size: 0.21 µm)
- Titanium oxide 2: Titanium oxide particles (TCR-52, manufactured by Sakai Chemical Industry Co., Ltd., particle size: 0.23 µm)
- Titanium oxide 3: Titanium oxide particles (R-24, manufactured by Sakai Chemical Industry Co., Ltd., particle size: 0.20 µm)
- Titanium oxide 4: Titanium oxide particles (CR-90, manufactured by Ishihara Sangyo Kaisha, Ltd., rutile, particle size: 0.25 µm)
- Titanium oxide 5: Titanium oxide ultrafine particles (TTO-55 (S), manufactured by Ishihara Sangyo Kaisha, Ltd., particle size: 0.035 µm)
- Zinc oxide 1: Zinc oxide particles (manufactured by Mitsui Kinzoku, average particle size: 0.75 µm)

Here, "particle size" is the average particle size of 100 particles measured by observation using an electron microscope.

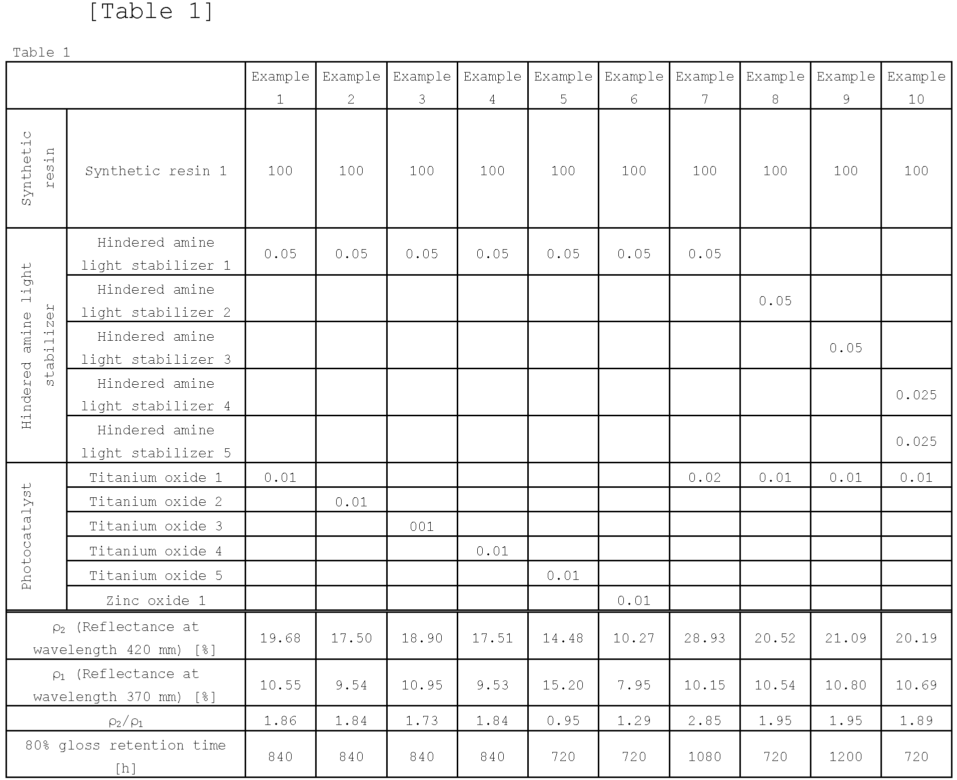

### [Table 2]

**Table 2**

| | | Comparative Example 1 | Comparative Example 2 | Comparative Example 3 | Comparative Example 4 | Comparative Example 5 | Comparative Example 6 |
|---|---|---|---|---|---|---|---|
| Synthetic resin | Synthetic resin 1 | 100 | 100 | 100 | 100 | 100 | 100 |
| Hindered amine light stabilizer | Hindered amine light stabilizer 1 | | 0.05 | 0.05 | | | |
| | Hindered amine light stabilizer 2 | | | | 0.05 | | |
| | Hindered amine light stabilizer 3 | | | | | | |
| | Hindered amine light stabilizer 4 | | | | | 0.25 | |
| | Hindered amine light stabilizer 5 | | | | | 0.25 | |
| Photocatalyst | Titanium oxide 1 | | | 1 | | | 0.5 |
| | Titanium oxide 2 | | | | | | |
| | Titanium oxide 3 | | | | | | |
| | Titanium oxide 4 | | | | | | |
| | Titanium oxide 5 | | | | | | |
| | Zinc oxide 1 | | | | | | |
| ρ₂ (Reflectance at wavelength 420 mm) [%] | | 8.77 | 8.98 | 83.84 | 9.23 | 9.29 | 85.54 |
| ρ₁ (Reflectance at wavelength 370 mm) [%] | | 9.78 | 10.04 | 8.14 | 10.44 | 10.42 | 10.02 |
| ρ₂/ρ₁ | | 0.90 | 0.89 | 10.30 | 0.88 | 0.89 | 8.54 |
| 80% gloss retention time [h] | | <120 | 600 | >1200 | 480 | 600 | 120 |

### <Characteristics Evaluation>

The obtained resin composition was evaluated for the following items.

### (Color Tone Controllability)

The obtained resin composition was injection molded under conditions of a resin temperature of 230°C and a mold temperature of 40°C to produce a plate-shaped test piece having a thickness of 2 mm. The relative diffuse reflectance spectrum of this test piece was measured using an Ultraviolet-Visible Spectrophotometer (V-750, manufactured by JASCO Corporation) using barium sulfate as a standard white plate and the relative diffuse reflectance (%) at a wavelength of 370 nm was set as ρ₁ and the relative diffuse reflectance (%) at 420 nm was set as ρ₂. The values of ρ₁, ρ₂, and ρ₂/ρ₁ for Examples 1 to 10 and Comparative Examples 1 to 6 are shown in Tables 1 and 2.

### (Weather Resistance)

The above test pieces were placed in a weather resistance tester (xenon weather meter, manufactured by Suga Test Instruments Co., Ltd.) and weather resistance tests were performed under the conditions specified in SAEJ2412. Here, the glossiness (gloss value) of each test piece was measured before and during the weather resistance test and the time (h) from the start of the test until the glossiness of the test piece became 80% or less of the glossiness before the weather resistance test was set as the "80% gloss retention time" and used as the weather resistance index. Here, the glossiness of the test piece was measured using a gloss meter (Nippon Denshoku Industries Co., Ltd., VG-2000) at a measurement angle of 60°. Table 1 and Table 2 show the 80% gloss retention times for Examples 1 to 10 and Comparative Examples 1 to 6.

The resin compositions of Examples 1 to 10 had a longer 80% gloss retention time than the resin compositions of Comparative Examples 1, 2, and 4 to 6 and thus exhibited excellent weather resistance results.

In addition, in the results, the resin compositions of Examples 1 to 10 had a smaller relative diffuse reflectance ρ₂ at 420 nm than the resin composition of Comparative Example 3. That is, when the resin compositions of Examples 1 to 10 are colored by methods such as adding pigments, the influence on the color tone due to reflection and scattering of light in the visible light region becomes smaller and thus the resin compositions of Examples 1 to 10 were found to have superior color tone controllability to the resin composition of Comparative Example 3.

### (Example 11, Comparative Examples 7 to 9)

### <Production of Film Formed of Resin Composition>

100 parts by mass of a synthetic resin 2 described below, the hindered amine light stabilizer 5 and the photocatalyst (the above titanium oxide 1) in the blending ratios shown in Table 3, 0.05 parts by mass of octadecyl 3-(3',5'-di-tert-butyl-4'-hydroxyphenyl)propionate as a phenol-based antioxidant, 0.05 parts by mass of tris(2,4-di-tert-butylphenyl)phosphite as a phosphorus-based antioxidant, 0.05 parts by mass of calcium stearate as a fatty acid metal salt, and 0.2 parts by mass of a dispersant (non-ionic surfactant, manufactured by Marubishi Yuka Kogyo Co., Ltd., product name "Denon 3000") were blended and mixed uniformly and the obtained mixture was introduced into a melt kneading device (Labo Plastomill Micro, manufactured by Toyo Seiki Co., Ltd.) connected to a small single-screw extruder (D1220B, manufactured by Toyo Seiki Co., Ltd.) and a T-die (MT60B, manufactured by Toyo Seiki Co., Ltd.), melt-kneaded at a melt temperature of 200°C and a screw speed of 20 rpm, and then molded into a film having a thickness of 50 µm at a T-die temperature of 190°C and a roll temperature of 40°C.

Here, in Table 3, the unit of the blending ratio of each component is parts by mass.

The raw material information listed in Table 3 is shown below.

### (Synthetic Resin)

- Synthetic resin 2: Linear low-density polyethylene (manufactured by Japan Polyethylene Co., Ltd.: product name "Harmolex NF464N")

### [Table 3]

**Table 3**

| | | Example 11 | Comparative Example 7 | Comparative Example 8 | Comparative Example 9 |
|---|---|---|---|---|---|
| Synthetic resin | Synthetic resin 2 | 100 | 100 | 100 | 100 |
| Hindered amine light stabilizer | Hindered amine light stabilizer 5 | 0.2 | 0.2 | | |
| Photocatalyst | Titanium oxide 1 | 0.01 | | 0.01 | |
| Breaking time [h] | | 3120 | 1920 | 1440 | 1440 |

### <Characteristic Evaluation>

### (Weather Resistance)

The film obtained as described above was cut into a rectangle of 30 mm x 60 mm and introduced as a test sample in a weather resistance tester (manufactured by Ametek Co., Ltd., xenon weather meter, device name "Atlas Ci4000") and a weather resistance test was carried out under the conditions in Table 4 in accordance with the ISO 4892-2 standard.

### [Table 4]

**Table 4**

| Weather resistance test conditions | |
|---|---|
| Test cycle | 102 minutes: light irradiation/18 minutes: light irradiation + water spray |
| Irradiance [W/m²] | 0.55 (Wavelength 340 nm) |
| Temperature inside the chamber [°C] | Light irradiation time: 40±2 |
| Black panel temperature [°C] | Light irradiation time: 65±2 |
| Humidity RH [%] | Light irradiation time: 50±2 |

After the start of the test, the time (h) until breaking of the test sample was visually confirmed was measured and used as an index of weather resistance. The results are shown in Table 3.

In the results, the film formed of the resin composition of Example 11 had superior weather resistance to the films formed of the resin compositions of Comparative Examples 7 to 9.

This application claims priority based on Japanese Patent Application No. 2022-066464, filed on April 13, 2022, the entire disclosure of which is incorporated herein by reference.

## Claims

1. A resin composition comprising:
a synthetic resin;
a hindered amine light stabilizer; and
a photocatalyst,
wherein a content of the photocatalyst is equal to or more than 0.001 parts by mass and less than 0.5 parts by mass with respect to 100 parts by mass of the synthetic resin.

2. The resin composition according to Claim 1,
wherein the synthetic resin includes a polyolefin-based resin.

3. The resin composition according to Claim 1 or 2,
wherein the synthetic resin includes a polyethylene-based resin.

4. The resin composition according to any one of Claims 1 to **3,**
wherein the synthetic resin does not include a polypropylene-based resin.

5. The resin composition according to any one of Claims 1 to 4,
wherein the hindered amine light stabilizer includes a component having a molecular weight of less than 1500.

6. The resin composition according to any one of Claims 1 to 5,
wherein the hindered amine light stabilizer includes a component having a molecular weight of 500 or more.

7. The resin composition according to any one of Claims 1 to 6,
wherein the hindered amine light stabilizer has a piperidine ring, and the piperidine ring is a secondary amine.

8. The resin composition according to any one of Claims 1 to 7,
wherein the hindered amine light stabilizer includes one or two or more compounds represented by General Formula (1), 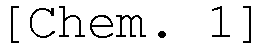 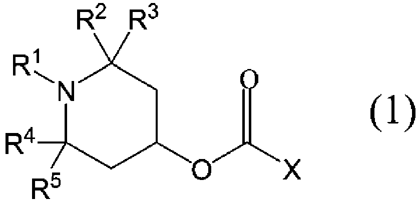
(in General Formula (1), R¹ represents a hydrogen atom, an alkyl group having 1 to 30 carbon atoms, or an alkoxy group having 1 to 30 carbon atoms, R² to R⁵ each independently represent a hydrogen atom or an alkyl group having 1 to 30 carbon atoms, and X represents a fatty acid residue having 7 to 29 carbon atoms, a group represented by General Formula (2), or a group represented by General Formula (3)), 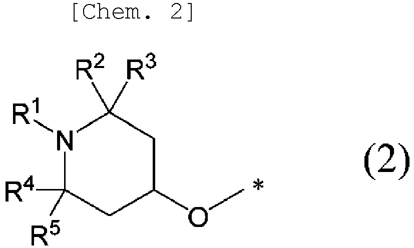 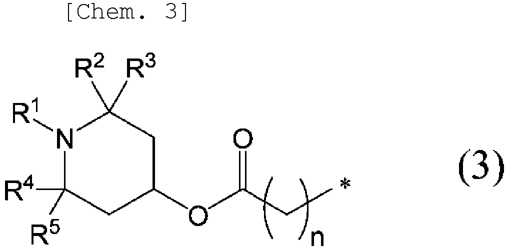
(in General Formulas (2) and (3), * represents a site bonded to a carbonyl group, and n represents an integer of 1 to 20).

9. The resin composition according to any one of Claims 1 to 8,
wherein the hindered amine light stabilizer includes one or two or more selected from the group consisting of 1,6-bis(2,2,6,6-tetramethyl-4-piperidylamino)hexane/2,4-dichloro-6-tert-octylamino-s-triazine polycondensates, 1,6-bis(1,2,2,6,6-pentamethyl-4-piperidylamino)hexane/2,4-dichloro-6-tert-octylamino-s-triazine polycondensates, 1,6-bis(1,2,2,6,6-pentamethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-morpholino-s-triazine polycondensates, 1,2,3,4-butanetetracarboxylic acid/2,2-bis(hydroxymethyl)-1,3-propanediol/3-hydroxy-2,2-dimethylpropanal/2,2,6,6-tetramethyl-4-piperidinyl ester polycondensates, 1,2,3,4-butanetetracarboxylic acid/2,2-bis(hydroxymethyl)-1,3-propanediol/3-hydroxy-2,2-dimethylpropanal/1,2,2,6,6-pentamethyl-4-piperidinyl ester polycondensates, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(1,2,2,6,6-pentamethyl-4-piperidylamino)hexane/dibromoethane polycondensates, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-ylamino]undecane, 1,6,11-tris[2,4-bis(N-butyl-N-(1,2,2,6,6-pentamethyl-4-piperidyl)amino)-s-triazin-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, 2,2,4,4-tetramethyl-7-oxa-3,20-diazadispiro-[5.1.11.2]-heneicosan-21-one, poly{2,2,4,4-tetramethyl-7-oxa-3,20-diaza-20(2,3-epoxypropyl)dispiro-[5.1.11.2]-heneicosan-21-one}, and a compound represented by General Formula (5), 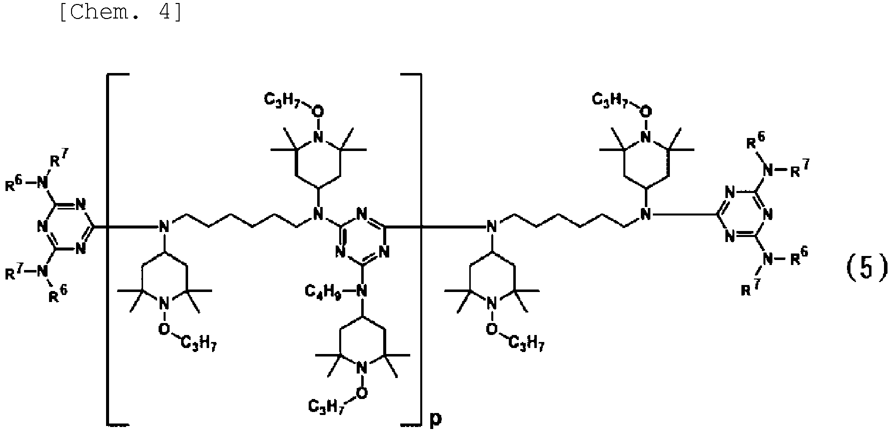
(in General Formula (5), R⁶ and R⁷ each independently represent an alkyl group having 1 to 30 carbon atoms or a 1-(n-propoxy)-2,2,6,6-tetramethylpiperidin-4-yl group, and p represents an integer of 0 or more).

10. The resin composition according to any one of Claims 1 to 9,
wherein the photocatalyst includes titanium oxide.

11. The resin composition according to any one of Claims 1 to 10,
wherein the resin composition does not include a colorant (except for the photocatalyst).

12. A resin additive composition used for producing the resin composition according to any one of Claims 1 to 11 by being added to a synthetic resin, the resin additive composition comprising:
a hindered amine light stabilizer; and
a photocatalyst.

13. A resin structure formed from the resin composition according to any one of Claims 1 to 11.

14. A method for improving weather resistance of a resin composition including a synthetic resin, the method comprising:
a step of adding a hindered amine light stabilizer and a photocatalyst to the synthetic resin.

15. The method for improving weather resistance of a resin composition according to Claim 14,
wherein an added amount of the photocatalyst is equal to or more than 0.001 parts by mass and less than 0.5 parts by mass with respect to 100 parts by mass of the synthetic resin.

16. A method for producing a resin composition, the method comprising:
a step of adding a hindered amine light stabilizer and a photocatalyst to a synthetic resin.

17. The method for producing a resin composition according to Claim 16,
wherein an added amount of the photocatalyst is equal to or more than 0.001 parts by mass and less than 0.5 parts by mass with respect to 100 parts by mass of the synthetic resin.

18. A hindered amine light stabilizer for use in a resin composition, the resin composition comprising:
a synthetic resin;
the hindered amine light stabilizer; and
a photocatalyst,
wherein a content of the photocatalyst is equal to or more than 0.001 parts by mass and less than 0.5 parts by mass with respect to 100 parts by mass of the synthetic resin.

19. The hindered amine light stabilizer according to Claim 18, further comprising:
a component having a molecular weight of less than 1500.

20. The hindered amine light stabilizer according to Claim 18 or 19, further comprising:
a component having a molecular weight of 500 or more.

21. The hindered amine light stabilizer according to any one of Claims 18 to 20, further comprising:
a piperidine ring,
wherein the piperidine ring is a secondary amine.

22. The hindered amine light stabilizer according to any one of Claims 18 to 21, further comprising:
one or two or more compounds represented by General Formula (1), 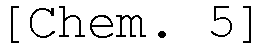 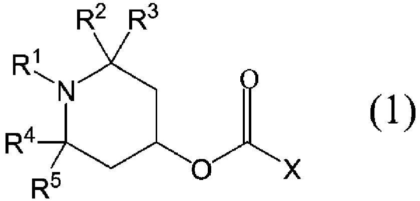
(in General Formula (1), R¹ represents a hydrogen atom, an alkyl group having 1 to 30 carbon atoms, or an alkoxy group having 1 to 30 carbon atoms, R² to R⁵ each independently represent a hydrogen atom or an alkyl group having 1 to 30 carbon atoms, and X represents a fatty acid residue having 7 to 29 carbon atoms, a group represented by General Formula (2), or a group represented by General Formula (3)), 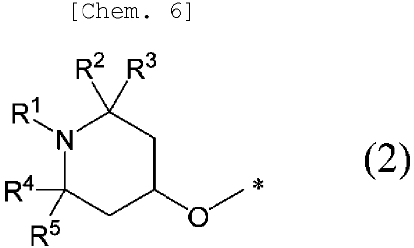 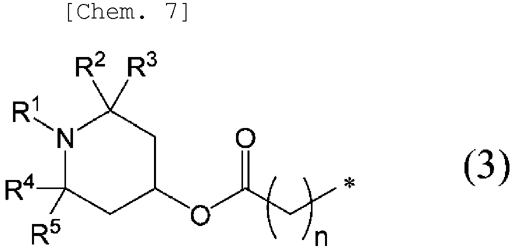
(in General Formulas (2) and (3), * represents a site bonded to a carbonyl group, and n represents an integer of 1 to 20).

23. The hindered amine light stabilizer according to any one of Claims 18 to 22, further comprising:
one or two or more selected from the group consisting of 1,6-bis(2,2,6,6-tetramethyl-4-piperidylamino)hexane/2,4-dichloro-6-tert-octylamino-s-triazine polycondensates, 1,6-bis(1,2,2,6,6-pentamethyl-4-piperidylamino)hexane/2,4-dichloro-6-tert-octylamino-s-triazine polycondensates, 1,6-bis(1,2,2,6,6-pentamethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-morpholino-s-triazine polycondensates, 1,2,3,4-butanetetracarboxylic acid/2,2-bis(hydroxymethyl)-1,3-propanediol/3-hydroxy-2,2-dimethylpropanal/2,2,6,6-tetramethyl-4-piperidinyl ester polycondensates, 1,2,3,4-butanetetracarboxylic acid/2,2-bis(hydroxymethyl)-1,3-propanediol/3-hydroxy-2,2-dimethylpropanal/1,2,2,6,6-pentamethyl-4-piperidinyl ester polycondensates, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(1,2,2,6,6-pentamethyl-4-piperidylamino)hexane/dibromoethane polycondensates, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-ylamino]undecane, 1,6,11-tris[2,4-bis(N-butyl-N-(1,2,2,6,6-pentamethyl-4-piperidyl)amino)-s-triazin-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, 2,2,4,4-tetramethyl-7-oxa-3,20-diazadispiro-[5.1.11.2]-heneicosan-21-one, poly{2,2,4,4-tetramethyl-7-oxa-3,20-diaza-20(2,3-epoxypropyl)dispiro-[5.1.11.2]-heneicosan-21-one}, and a compound represented by General Formula (5), 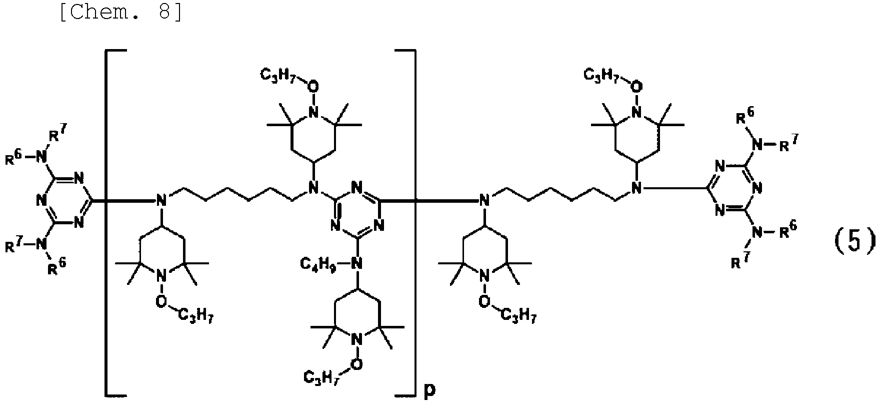
(in General Formula (5), R⁶ and R⁷ each independently represent an alkyl group having 1 to 30 carbon atoms or a 1-(n-propoxy)-2,2,6,6-tetramethylpiperidin-4-yl group, and p represents an integer of 0 or more).
